# FASCICULE DE BREVET EUROPEEN

(11) **EP 3 041 742 B1**
(45) Date de publication et mention de la délivrance du brevet: **09.01.2019**
(21) Numéro de dépôt: 14786980.4
(22) Date de dépôt: 25.08.2014
(51) Int. Cl.: B64D 27/26, F01D 25/16, F01D 25/24

(54) **STRUCTURE DE CARTER INTERPOSEE ENTRE LE MOTEUR ET LA NACELLE A SECTEURS DE VIROLE PIVOTANTS**
TRIEBWERKSGEHÄUSE MIT SCHWENKBAREN WARTUNGSKLAPPEN
ENGINE CASING HAVING PIVOTABLE ACCESS DOORS

(30) Priorité: 04.09.2013 FR 1358478
(43) Date de publication de la demande: 13.07.2016
(73) Titulaire: Safran Aircraft Engines, 75015 Paris (FR)
(72) Inventeur: BELJAMBE, Ceddric, F-77550 Moissy-cramayel Cedex (FR); ROBIN, Noël, F-77550 Moissy-cramayel Cedex (FR)
(74) Mandataire: David, Alain
(86) Numéro de dépôt international: PCT/FR2014/052121
(87) Numéro de publication internationale: WO 2015/033042

(56) Documents cités:
- EP-A1- 1 741 879
- EP-A1- 2 392 509
- EP-A2- 1 998 012
- WO-A1-2012/013889
- WO-A2-2010/007226
- FR-A1- 2 953 810

## Description

### Arrière-plan de l'invention

La présente invention se rapporte au domaine des moteurs d'aéronef, par exemple des turboréacteurs, et elle concerne plus particulièrement une structure de carter interposée entre le moteur et la nacelle. Une telle structure est par exemple connue à partir du document EP-A1-1 741 879.

Comme il est connu, une telle structure doit assurer, outre la jonction mécanique entre le moteur et la nacelle :
- la continuité de la veine aérodynamique du flux secondaire ;
- le passage et le maintien des servitudes (électrique, mécanique, hydraulique) entre les différents composants du moteur (core, fan, etc...) et la nacelle de ce moteur ;
- la protection au feu entre les différents compartiments du moteur et le flux secondaire ;
- l'accessibilité aux équipements et aux servitudes pour la maintenance.

Cette structure de carter est constituée d'un cadre cylindrique sectorisé (ou secteurs de virole) de faible largeur (de l'ordre de quelques centaines de millimètres selon l'axe moteur) devant permettre un accès aisé aux équipements qu'il recouvre (par exemple les bielles de reprise de poussée ou encore différents vérins d'actionnement de servitudes) dès l'ouverture de la nacelle et d'au moins un bras radial disposé autour de ce cadre. Classiquement, le cadre supporte également des écopes du système de déchargement d'air (booster VBV).

Les temps de maintenance devant être optimisés, le cadre apparait donc comme un obstacle à l'accès aux équipements placés en dessous de lui et qui doivent pouvoir être déposés, changés, vérifiés... sous aile dès l'ouverture de la nacelle, en prenant en compte le temps de montage et démontage du cadre lui-même, dans un temps limité et dépendant de l'application.

Il existe donc un besoin d'une structure de carter qui permette d'assurer un accès facilité à ces équipements (c'est-à-dire compatible avec les temps de maintenance au sol autorisés) tout en réalisant l'ensemble des fonctions précitées et notamment une réduction des perturbations dans la veine aérodynamique.

### Objet et résumé de l'invention

La présente invention a donc pour but principal de pallier de tels inconvénients en proposant une structure de carter interposée entre le moteur et la nacelle d'un aéronef comportant :
une virole entourant le moteur ayant un axe moteur et comprenant une partie fixe et une pluralité de secteurs,
au moins un bras radial assurant la liaison à la nacelle,
une pluralité de moyens de fixation pour solidariser ladite pluralité de secteurs de virole entre eux ou avec ledit au moins un bras radial,
caractérisée en ce que ladite pluralité de moyens de fixation comporte deux séries de perçages pratiqués dans deux parois latérales parallèles desdits secteurs de virole et destinés à recevoir respectivement deux séries de vis traversant chacune un ensemble correspondant d'orifices d'un secteur de virole adjacent ou d'un bras radial adjacent, une articulation étant en outre disposée entre chacun desdits secteurs de virole et ladite partie fixe de ladite virole pour permettre un pivotement individualisé de chacun desdits secteurs de virole selon un axe de rotation commun perpendiculaire auxdites parois latérales disposées selon ledit axe moteur.

Ainsi, l'articulation de chacun des secteurs de virole autour d'un axe de rotation permet un « escamotage » facile et rapide d'un secteur donné, indépendamment des secteurs voisins, pour accéder aux équipements ou servitudes qu'il recouvre et cela sans la nécessité d'avoir pendant l'intervention à stocker le secteur ouvert du fait de son maintien à la virole.

De préférence, ladite articulation est formée par deux bras solidaires pour l'un dudit corps de secteur de virole et pour l'autre de ladite partie fixe de virole, lesdits deux bras étant reliés par ledit axe de rotation commun permettant le pivotement de l'articulation perpendiculairement audit axe moteur.

Avantageusement, chacun desdits secteurs de virole est recouvert d'un capot fixé sur un corps desdits secteurs de virole par des vis à tête, ledit capot comportant des orifices avec des chanfreins à leur entrée pour s'adapter aux têtes desdites vis à tête et ainsi permettre leur montage à affleurement.

De préférence, ledit corps de secteur de virole comporte une ouverture faisant fonction d'écopes pour recevoir un conduit de déchargement d'air.

L'invention concerne également tout moteur d'aéronef comportant une structure de carter telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif et sur lesquels :
- la figure 1 est une perspective externe d'une structure de carter interposée entre le moteur et la nacelle conforme à l'invention ;
- la figure 2 est une vue en coupe de la figure 1 au niveau d'un secteur de virole ;
- la figure 3 est une vue en coupe similaire à celle de la figure 2, le secteur de virole ayant basculé pour permettre un accès aux équipements ; et
- la figure 4 est une vue de dessus de la structure de carter de la figure 1, le capot d'un secteur de virole étant enlevé.

### Description détaillée d'un mode de réalisation

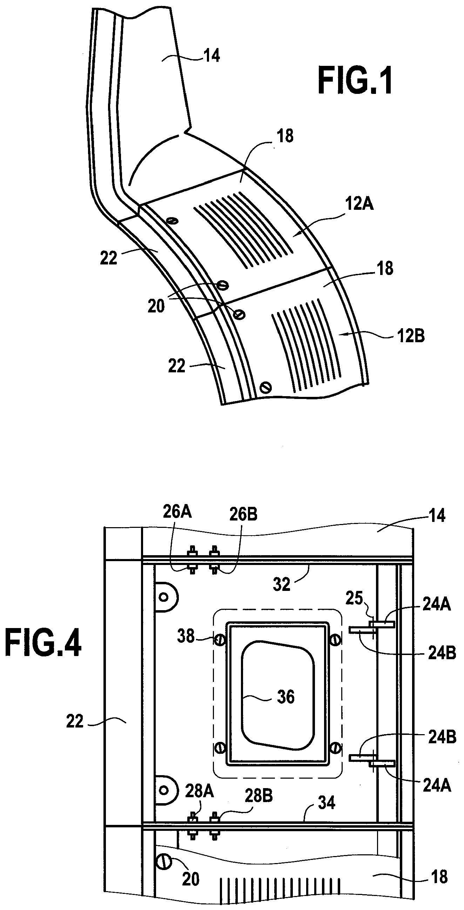

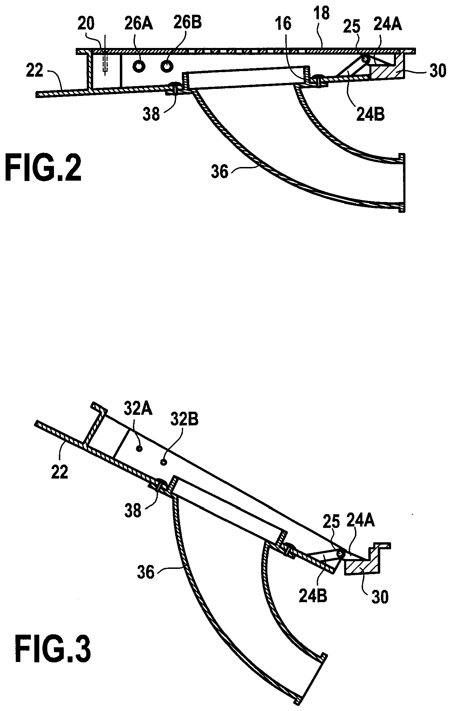

Les figures 1 et 2 représentent respectivement en perspective et en coupe une partie de la structure de carter 10 interposée entre lemoteur et la nacelle d'un aéronef, typiquement un turboréacteur, qui se présente sous la forme d'une virole sectorisée (dont seuls deux secteurs 12A, 12B sont représentés) reliée par au moins un bras radial de support du carter de la nacelle (par exemple le bras radial 14). Selon la circonférence du moteur, la position des équipements comme les bielles de reprise de poussée, les vérins actionnant les VBV ou VSV par exemple, la virole peut comporter jusqu'à huit secteurs adjacents dissociables les uns des autres et montés entre plusieurs bras radiaux régulièrement répartis. Chaque secteur de virole est percé d'ouvertures 16 faisant fonction d'écopes pour un des systèmes de déchargement d'air de la turbomachine (par exemple le système VBV ou variable bleed vane).

Les secteurs de virole comportent chacun un capot externe 18 fixé par des vis à tête 20 traversant le corps 22 de ces secteurs de virole. Les orifices de ce capot comportent avantageusement à leur entrée des chanfreins pour s'adapter aux têtes de ces vis à tête et ainsi permettre leur montage à affleurement, de sorte que la tête de chaque vis s'y positionne exactement. Elle se retrouve alors alignée avec la face supérieure du capotage en contact avec la veine secondaire et ne constitue donc pas un obstacle pour le flux d'air secondaire dont la continuité aérodynamique est ainsi assurée.

Selon l'invention et comme le montrent plus particulièrement les figures 3 et 4, les secteurs de viroles sont solidarisés entre eux ou avec les bras radiaux par des moyens de fixation comportant deux séries de perçages pratiqués dans deux parois latérales parallèles 32, 34 des secteurs de virole et destinés à recevoir respectivement deux séries de vis 26A, 26B ; 28A, 28B traversant chacune un ensemble correspondant d'orifices 32A, 32B d'un secteur de virole adjacent ou d'un bras radial adjacent pour assurer leur maintien respectif, une articulation 24 étant en outre disposée entre chacun de ces secteurs de virole et une partie fixe 30 de la liaison (par exemple une partie de virole restante) pour permettre, une fois les vis retirées, un pivotement individualisé de chacun des secteurs de virole selon un axe de rotation commun 25 perpendiculaire auxdites parois latérales, c'est-à-dire tangent à une ligne centrale de la surface externe du secteur de virole.

La pluralité de vis est destinée à traverser une pluralité de perçages réalisée dans les deux parois latérales de chaque secteur de virole. Par exemple, les deux vis 26A, 26B traverseront les deux perçages 32A, 32B de la paroi latérale 32 du secteur 12A de virole et viendront se loger dans la paroi latérale du bras radial 14 adjacent. Bien entendu, le nombre de vis n'est qu'indicatif, la liaison aux parois latérales devant être effectuée par au moins deux vis pour assurer une redondance. Il faut cependant en limiter le nombre car un nombre trop important de vis serait pénalisant en termes d'opération de vissage/dévissage lors de la maintenance. En outre, ces vis participant à la formation annulaire de l'ensemble des secteurs de viroles, elles encaissent nécessairement de nombreux efforts et doivent donc être suffisamment résistantes pour assurer une liaison rigide.

L'articulation 24 est classiquement constituée par deux bras 24A, 24B solidaires pour l'un du corps 22 du secteur de virole et pour l'autre de la partie fixe 30 de cette virole, ces deux bras étant reliés par un axe de rotation commun 25 permettant le pivotement de l'articulation. Cette articulation peut être unique, et alors centrale, ou bien double de part et d'autre d'un axe central du secteur, comme représentée, ou encore multiple et alors régulièrement répartie le long de la paroi amont (par rapport au déplacement du flux secondaire) du secteur de virole. Une butée (non représentée) peut être prévue pour limiter le pivotement à l'ouverture du secteur de virole, l'alignement à la fermeture avec les secteurs adjacents étant obtenu par exemple, comme illustré à la figure 3, par le contact du corps de secteur 22 avec la partie fixe 30. On notera aussi la présence d'un conduit 36 de déchargement d'air de l'écope qui est fixé au moyen de vis 38 dans l'ouverture 16 du corps de secteur.

Ainsi, le fait de pouvoir pivoter le secteur de virole grâce à son articulation, une fois les vis de liaison aux secteurs adjacents retirées, permet lors d'une opération de maintenance des équipements sous ce secteur (par exemple le contrôle périodique des bielles de reprise de poussée) un accès rapide et facile à ces équipements, tout en ne touchant pas aux secteurs de virole adjacents et en évitant un stockage temporaire (source éventuelle de détérioration ou de perte) de ce secteur.

## Revendications

1. Structure de carter apte à assurer la jonction mécanique entre le moteur et la nacelle d'un aéronef, comportant :
une virole destinée à entourer le moteur ayant un axe moteur et comprenant une partie fixe (30) et une pluralité de secteurs (12A, 12B),
au moins un bras radial (14) disposé autour de ladite virole et destiné à assurer la liaison avecà la nacelle,
une pluralité de moyens de fixation pour solidariser ladite pluralité de secteurs de virole entre eux ou avec ledit au moins un bras radial, ladite pluralité de moyens de fixation comportant deux séries de perçages pratiqués dans deux parois latérales parallèles (32, 34) desdits secteurs de virole et destinés à recevoir respectivement deux séries de vis (26A, 26B ; 28A, 28B) traversant chacune un ensemble correspondant d'orifices (32A, 32B) d'un secteur de virole adjacent ou d'un bras radial adjacent,
**caractérisée en ce qu'** une articulation (24) est en outre disposée entre chacun desdits secteurs de virole et ladite partie fixe de ladite virole pour permettre un pivotement individualisé de chacun desdits secteurs de virole selon un axe de rotation (25) perpendiculaire auxdites parois latérales disposées selon ledit axe moteur.

2. Structure de carter selon la revendication 1, **caractérisée en ce que** ladite articulation est formée par deux bras (24A, 24B) solidaires pour l'un dudit corps de secteur de virole et pour l'autre de ladite partie fixe de virole, lesdits deux bras étant reliés par ledit axe de rotation permettant le pivotement de l'articulation perpendiculairement audit axe moteur.

3. Structure de carter selon la revendication 1 ou la revendication 2, **caractérisée en ce que** chacun desdits secteurs de virole est recouvert d'un capot (18) fixé sur un corps (22) desdits secteurs de virole par des vis à tête (20), ledit capot comportant des orifices avec des chanfreins à leur entrée pour s'adapter aux têtes desdites vis à tête et ainsi permettre leur montage à affleurement.

4. Structure de carter selon la revendication 3, **caractérisée en ce que** ledit corps de secteur de virole comporte une ouverture (16) faisant fonction d'écopes pour recevoir un conduit de déchargement d'air (36).

5. Moteur d'aéronef comportant une structure de carter selon l'une quelconque des revendications 1 à 4.

## Patentansprüche

1. Gehäuseaufbau, der dazu geeignet ist, die mechanische Verbindung zwischen dem Triebwerk und der Triebwerksgondel eines Luftfahrzeugs sicherzustellen, umfassend:
einen Mantel, der dazu bestimmt ist, das Triebwerk zu umschließen, und der eine Triebwerksachse aufweist und einen fixen Teil (30) und eine Vielzahl von Sektoren (12A, 12B) umfasst,
zumindest einen radialen Arm (14), der um den Mantel herum angeordnet ist und dazu bestimmt ist, die Verbindung mit der Triebwerksgondel sicherzustellen,
eine Vielzahl von Befestigungsmitteln, um die Vielzahl von Mantelsektoren untereinander oder an dem zumindest einen radialen Arm zu befestigen, wobei die Vielzahl von Befestigungsmitteln zwei Reihen von Bohrungen umfasst, die in zwei parallelen Seitenwänden (32, 34) der Mantelsektoren ausgeführt sind und dazu bestimmt sind, jeweils zwei Reihen von Schrauben (26A, 26B; 28A, 28B) aufzunehmen, die jeweils durch eine entsprechende Anordnung von Löchern (32A, 32B) eines benachbarten Mantelsektors oder eines benachbarten radialen Arms laufen,
**dadurch gekennzeichnet, dass** ferner ein Gelenk (24) zwischen jedem der Mantelsektoren und dem fixen Teil des Mantels angeordnet ist, um ein individuelles Schwenken eines jeden der Mantelsektoren gemäß einer Drehachse (25) zu erlauben, die senkrecht auf die Seitenwände steht, die gemäß der Triebwerksachse angeordnet sind.

2. Gehäuseaufbau nach Anspruch 1, **dadurch gekennzeichnet, dass** das Gelenk durch zwei Arme (24A, 24B) gebildet wird, die einerseits an dem Körper des Mantelsektors und andererseits an dem fixen Teil des Mantels befestigt sind, wobei die zwei Arme durch die Drehachse verbunden sind, was das Schwenken des Gelenks senkrecht auf die Triebwerksachse erlaubt.

3. Gehäuseaufbau nach Anspruch 1 oder Anspruch 2, **dadurch gekennzeichnet, dass** jeder der Mantelsektoren von einer Kappe (18) abgedeckt wird, die an einem Körper (22) der Mantelsektoren durch Kopfschrauben (20) befestigt ist, wobei die Kappe Löcher mit Abfasungen an ihrem Eingang umfasst, um an die Köpfe der Kopfschrauben angepasst zu sein und somit ihre bündige Montage zu erlauben.

4. Gehäuseaufbau nach Anspruch 3, **dadurch gekennzeichnet, dass** der Körper des Mantelsektors eine Öffnung (16) umfasst, die die Funktion von Fassungen zur Aufnahme einer Luftausstoßleitung (36) erfüllt.

5. Triebwerk für ein Luftfahrzeug, umfassend einen Gehäuseaufbau nach einem der Ansprüche 1 bis 4.

## Claims

1. A casing structure fitted for providing the mechanical junction between the engine and the nacelle of an aircraft, the structure comprising:
• a shroud destined to surround the engine having an engine axis and comprising a stationary portion (30) and a plurality of sectors (12A, 12B);
• at least one radial arm (14) arranged around said shroud and destined to provide the connection with the nacelle; and
• a plurality of fastener means for securing said plurality of shroud sectors to one another or to said at least one radial arm, said plurality of fastener means comprising two series of holes formed in two parallel side walls (32, 34) of said shroud sectors destined to receive two respective series of bolts (26A, 26B; 28A, 28B), each passing through a corresponding set of orifices (32A, 32B) of an adjacent shroud sector or of an adjacent radial arm, the structure being further **characterized by** a hinge (24) arranged between each of said shroud sectors and said stationary portion of said shroud in order to enable each of said shroud sectors to be pivoted in individual manner about a pivot axis (25) perpendicular to said side walls arranged along said engine axis.

2. A casing structure according to claim 1, **characterized in that** said hinge is formed by two arms (24A, 24B), one secured to said shroud sector body and the other to said stationary shroud portion, said two arms being connected by said pivot axis enabling the hinge to pivot perpendicularly to said engine axis.

3. A casing structure according to claim 1 or claim 2, **characterized in that** each of said shroud sectors is covered by a cap (18) that is fastened on a body (22) of said shroud sector by headed bolts (20), said cap including orifices with chamfers at their inlets to fit against the heads of said headed bolts and thus enable them to be mounted flush.

4. A casing structure according to claim 3, **characterized in that** said shroud sector body includes an opening (16) acting as a scope for receiving an air discharge duct (36) .

5. An aeroengine including a casing structure according to any one of claims 1 to 4.
